(19) Europäisches Patentamt
European Patent Office
Office européen des brevets

(11) EP 2 488 622 B1

(12) **EUROPEAN PATENT SPECIFICATION**

(45) Date of publication and mention of the grant of the patent:
**17.12.2014 Bulletin 2014/51**

(21) Application number: **10768213.0**

(22) Date of filing: **04.10.2010**

(51) Int Cl.:
***C11D 3/22*** (2006.01) ***C11D 3/40*** (2006.01)

(86) International application number:
**PCT/EP2010/064744**

(87) International publication number:
**WO 2011/045195 (21.04.2011 Gazette 2011/16)**

(54) **DYE POLYMERS**

FARBSTOFFPOLYMERE

POLYMÈRES COLORANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2009 PCT/CN2009/001135**

(43) Date of publication of application:
**22.08.2012 Bulletin 2012/34**

(73) Proprietors:
- **Unilever PLC**
**London, Greater London EC4Y 0DY (GB)**
Designated Contracting States:
**CY GB IE MT**
- **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**

(72) Inventors:
- **BATCHELOR, Stephen, Norman**
**Wirral Merseyside CH63 3JW (GB)**
- **BIRD, Jayne, Michelle**
**Wirral Merseyside CH63 3JW (GB)**
- **MENG, Sheng**
**Shanghai 200335 (CN)**
- **TAO, Qingsheng**
**Shanghai 200335 (CN)**
- **WANG, Jinfang**
**Shanghai 200335 (CN)**

(74) Representative: **Avila, David Victor et al**
**Unilever Patent Group**
**Colworth House**
**Sharnbrook**
**Bedford**
**MK44 1LQ (GB)**

(56) References cited:
**EP-A1- 1 852 496 WO-A1-2006/055787**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 488 622 B1

**Description**

FIELD OF INVENTION

The present invention relates to polymeric shading dye and their use in laundry applications

BACKGROUND OF THE INVENTION

WO2006/055787 (Procter & Gamble) discloses Laundry formulations containing a cellulose ether polymer covalently bound to a reactive dye for whitening fabric.

EP1852496 describes liquid detergents comprising a hueing agent.

SUMMARY OF THE INVENTION

Optimum whitening effects on fabrics occur with dyes and pigment which are true blue to violet in hue. Commercial reactive blue dyes are green-blue in hue, and to obtain a true blue to violet colour they may be mixed with reactive red dyes. Mixing of dyes leads to dull colours because of the increased light absorption. It would be desirable to have dye mixtures which could provide the correct hue colour without excessive dulling the fabrics.

In one aspect the present invention provides a laundry treatment composition comprising:

(i) from 2 to 70 wt% of a surfactant; and,
(ii) from 0.0001 to 2.0 wt%, preferably 0.05 to 1 wt%, of a polymeric carbohydrate covalently bound to a reactive blue anthraquinone dye and to a reactive red azo dye, blue-red dye polymer, wherein when the weight ratio of the blue dye: the red dye is from 10:1 to 10:4, preferably 10:1 to 10:2.

In another aspect the present invention provides a domestic method of treating a textile, the method comprising the steps of:

(i) treating a textile with an aqueous solution of the blue-red dye polymer as defined in any one of claims 1 to 11, the aqueous solution comprising from 10 ppb to 5000 ppm, preferably from 100 ppb to 100 ppm, of the blue-red dye polymer; and, from 0.0 g/L to 3 g/L of a surfactant; and,
(ii) optionally rinsing and drying the textile.

Preferably, the laundry treatment composition is granular.

DETAILED DESCRIPTION OF THE INVENTION

Blue-Red Dye Polymer

The dyes may be covalently linked together in a non conjugated manner before covalently tethering to the polymeric carbohydrate.

The total loading of dye (blue and red) on the blue-red dye polymer is preferably in the range 0.00001 wt % to 10 wt%, more preferably in the range 0.0001 wt % to 1 wt %, most preferably in the range 0.0001 wt % to 0.01 wt %.

Preferably, the reactive blue anthraquinone dye is of the following form:

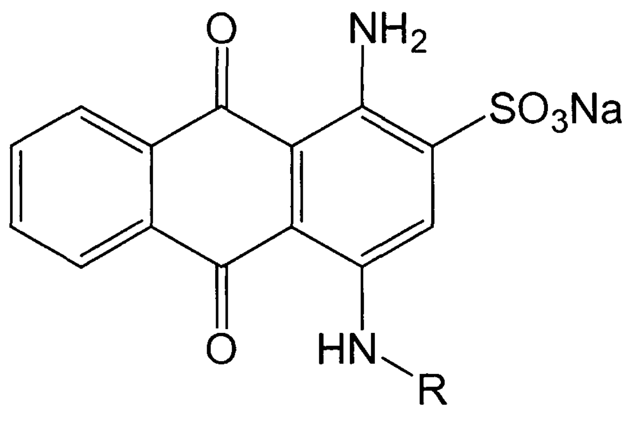

,

wherein R is an organic groups which contains a reactive group. Preferably, R is selected from: monochlorotriazinyl; dichlorotriazinyl; and, vinylsulfonyl.

Preferred reactive blue dyes are selected from: Reactive Blue 2; Reactive Blue 4; Reactive Blue 5; Reactive Blue 19; Reactive Blue 27; Reactive Blue 29; Reactive Blue 36; Reactive Blue 49; Reactive Blue 50; and, Reactive Blue 224.

Preferably, the reactive red azo dye is a reactive red monoazo dye and preferred reactive red mono-azo dye is of the following form:

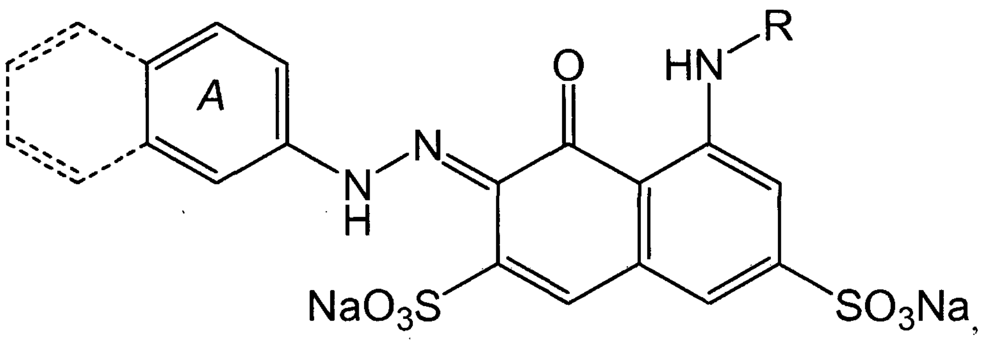

wherein the A ring is unsubstituted or substituted by a sulphonate group or a reactive group. Preferably, the A ring is napthyl and is substituted by two sulphonate groups. Preferably, R is an organic groups which contains a reactive group. Preferred reactive groups are monochlorotriazinyl; dichlorotriazinyl; and, vinylsulfonyl.

Preferred reactive red dyes are selected from: Reactive Red 1; Reactive Red 2; Reactive Red 3; Reactive Red 12; Reactive Red 17; Reactive Red 24; Reactive Red 29; Reactive Red 83; Reactive Red 88; Reactive Red 120; Reactive Red 125; Reactive Red 194; Reactive Red 189; Reactive Red 198; Reactive Red 219; Reactive Red 220; Reactive Red 227; Reactive Red 241; Reactive Red 261; and, Reactive Red 253.

<u>Reactive dyes</u>

Reactive dyes are described in Industrial Dyes (K.Hunger ed, Wiley VCH 2003).

Many Reactive dyes are listed in the colour index (Society of Dyers and Colourists and American Association of Textile Chemists and Colorists).

Reactive dyes undergo addition or substitution reactions with C-OH groups to form covalent bonds. Reactive dye may be bound to polymeric carbohydrates such as polysaccharides.

Reactive dyes are coloured compounds with one or more functional groups capable of forming a covalent bond with a suitable substrate, generally cotton or other cellulosic fibres. Typical reactive groups of the reactive dyes are monochlorotriazinyl, monofluorotrazinyl, difluorotriazine, difluorochloropyrimidine, trichloropyrimidine and 2-sulfooxyethylsulfonyl.

The reactive dyes have specific functional groups that can undergo addition or substitution reactions with -OH, -SH and -NH2 groups present in polymers.

<u>Polymeric Carbohydrate</u>

Polymeric carbohydrates have available hydroxyl groups that can be reacted with a reactive dye to provide the dye covalently bound to a polymeric carbohydrate.

The polymer is preferably selected from the group consisting of <u>cellulose</u> ethers such as chitosan, carboxymethyl <u>cellulose</u> including salts thereof such as sodium salt, methyl <u>cellulose,</u> hydroxyalkylcelluloses such as hydroxyl ethyl <u>cellulose</u>, and mixed ethers such as methyl hydroxyethylcellulose, methyl hydroxypropylcellulose, methyl carboxymethyl <u>cellulose</u>; fatty ester modified celluloses; phosphorylated celluloses such as those disclosed in WO 99/09124; <u>cellulose</u>, cationic starch, guar gum, uncharged starch.

When blue-red dye polymer comprises a cellulose ether, such as carboxymethyl cellulose, such cellulose ether preferably has: a weight average molecular weight up to 1,000,000 Daltons, more preferably 25,000 Daltons to 500,000 Daltons, even more preferably 30,000 Daltons to 120,000 Daltons. The degree of ether substitution, for example, carboxymethylation is preferably 0.2 to 1.3.

Weight average molecular weight is determined according to the general procedure detailed in the Journal of Chromatography 1980, 192, pages 275-293 or Polymer Degradation and Stability 56 (1997) 331-337; degree of ether substitution, and degree of carboxymethylation which is a subset of degree of ether substitution, is determined according

to ASTM Method D 1439-03 and the dye substitution is determined by combustion analysis.

OTHER DYES

In a preferred embodiment of the invention, other shading colourants may be present. They are preferably selected from blue and violet pigment such as pigment violet 23, solvent and disperse dyes such as solvent violet 13, disperse violet 28, bis-azo direct dyes such as direct violet 9, 35, 51 and 99, and triphenodioxazine direct dyes such as direct violet 54.

Even more preferred is the presence of acid azine dyes as described in WO 2008/017570; the level of the acid azine dyes should be in the range from 0.0001 to 0.1 wt%. The acid azine dyes provide benefit predominately to the pure cotton garments and the cationic phenazine dyes to the polycotton garments. Preferred acid azine dyes are acid violet 50, acid blue 59 and acid blue 98. Blue and Violet cationic phenazine dyes may also be present.

Photobleaches such as sulphonated Zn/Al phthalocyanins may be present.

SURFACTANT

The composition comprises between 2 to 70 wt % of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are $C_6$ to $C_{22}$ alkyl phenol-ethylene oxide condensates, generally 5 to 25 EO, i.e. 5 to 25 units of ethylene oxide per molecule, and the condensation products of aliphatic $C_8$ to $C_{18}$ primary or secondary linear or branched alcohols with ethylene oxide, generally 5 to 40 EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulphate together with a $C_{12}$ to $C_{15}$ primary alcohol 3 to 7 EO ethoxylate.

The nonionic detergent is preferably present in amounts greater than 10%, e.g. 25 to 90 wt % of the surfactant system. Anionic surfactants can be present for example in amounts in the range from about 5% to about 40 wt % of the surfactant system.

In another aspect which is also preferred the surfactant may be a cationic such that the formulation is a fabric conditioner.

CATIONIC COMPOUND

When the present invention is used as a fabric conditioner it needs to contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

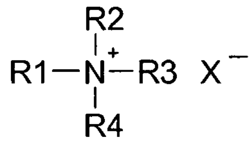

in which $R^1$ is a $C_{12}$ to $C_{22}$ alkyl or alkenyl chain; $R^2$, $R^3$ and $R^4$ are independently selected from $C_1$ to $C_4$ alkyl chains and $X^-$ is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently selected from $C_1$ to $C_4$ alkyl chains and $X^-$ is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Proctor and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

<u>Builders or Complexing agents:</u>

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetraacetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate. Preferably the laundry detergent formulation is carbonate built.

<u>FLUORESCENT AGENT</u>

The composition preferably comprises a fluorescent agent (optical brightener). Fluorescent agents are well known and many such fluorescent agents are available commercially. Usually, these fluorescent agents are supplied

and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

PERFUME

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

POLYMERS

The composition may comprise one or more polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

ENZYMES

One or more enzymes are preferred present in a composition of the invention and when practicing a method of the invention.

Preferrably the level of each enzyme is from 0.0001 wt% to 0.1 wt% protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces*), e.g. from *H. lanuginosa (T. lanuginosus)* as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens, Pseudomonas* sp. strain SD 705 (WO 95/06720 and WO 96/27002), *P. wisconsinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578,
WO 95/14783, WO 95/22615, WO 97/04079 and WO 97/07202, WO 00/60063.

Preferred commercially available lipase enzymes include Lipolase™ and Lipolase Ultra™, Lipex™ (Novozymes A/S).

The method of the invention may be carried out in the presence of phospholipase classified as EC 3.1.1.4 and/or EC 3.1.1.32. As used herein, the term phospholipase is an enzyme which has activity towards phospholipids. Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn,

may be esterified to an amino-alcohol.

Phospholipases are enzymes which participate in the hydrolysis of phospholipids. Several types of phospholipase activity can be distinguished, including phospholipases $A_1$ and $A_2$ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

The enzyme and the shading dye may show some interaction and should be chosen such that this interaction is not negative. Some negative interactions may be avoided by encapsulation of one or other of enzyme or shading dye and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlase™, Polarzyme™, and Kannase™, (Novozymes A/S), Maxatase™, Maxacal™, Maxapem™, Properase™, Purafect™, Purafect OxP™, FN2™, and FN3™ (Genencor International Inc.).

The method of the invention may be carried out in the presence of cutinase. classified in EC 3.1.1.74. The cutinase used according to the invention may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g. the fungal cellulases produced from *Humicola insolens, Thielavia terrestris, Myceliophthora thermophila,* and *Fusarium oxysporum* disclosed in US 4,435,307, US 5,648,263, US 5,691,178, US 5,776,757, WO 89/09259, WO 96/029397, and WO 98/012307. Commercially available cellulases include Celluzyme™, Carezyme™, Endolase™, Renozyme™ (Novozymes A/S), Clazinase™ and Puradax HA™ (Genencor International Inc.), and KAC-500(B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from C. *cinereus,* and variants thereof as those described in WO 93/24618, WO 95/10602, and WO 98/15257. Commercially available peroxidases include Guardzyme™ and Novozym™ 51004 (Novozymes A/S).

## ENZYME STABILIZERS

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

The indefinite article "a" or "an" and its corresponding definite article "the" as used herein means at least one, or one or more, unless specified otherwise.

## Experimental

### Example 1: Synthesis

0.5g of hydroxyethylcellulose, 0.5g $Na_2CO_3$ and 0.05g of reactive dye were mixed together in 100ml of demineralised water and heated at 60°C for 5 hours. Following the reaction the product was dialyzed against water (COMW=12000) for 72 hours. Water was then removed by rotary evaporation. The resultant polymer was dried in vacuum.

The following mixture of dyes were used:

| | |
|---|---|
| Polymer 1 | 0.050g Reactive Blue 4 (RB4) |
| Polymer 2 | 0.050g Reactive Red 2 (RR2) |
| Polymer 3 | 0.040g RB4 and 0.010g RR2 |
| Polymer 4 | 0.035 RB4 and 0.015 RR2 |

(continued)

| | |
|---|---|
| Polymer 5 | 0.030 RB4 AND 0.020 RR2 |

Example 2: Wash Performance

Woven Cotton, polyester and nylon-elastane fabrics were washed in an aqueous wash solution (demineralised water) containing 1g/L Linear Alkyl benzene sulfonate, 1g/L sodium carbonate and 1g/L sodium chloride at a liquor to cloth ratio of 30:1. To the wash solution shading were added the polymers of example 1 such that the wash solution contained 5ppm of polymer. After 30 minutes of agitation the clothes were removed rinsed and dried. Washes were then repeated until 4 wash cycles had been accomplished. After the 2nd and 4th wash the reflectance spectra of the cloths were measured on a reflectometer and the colour expressed as CIE L* a* b* values.

Dye deposition was only found on the cotton fabric. The observed hue angles on the cotton cloth were 234. 334, 265, 287 and 307 for polymer 1, polymer 2, polymer 3, polymer 4 and polymer 5 respectively. The polymers with both RB4 and RR2 give the optimum true blue to violet hue.

The dulling of the cotton cloth was expressed as the total colour deposited on the cloth given by the ΔE value:

$$\Delta E = [(L_c - L_d)^2 + (a_c - a_d)^2 + (b_c - b_d)^2]^{0.5}$$

Where $L_c$, $a_c$, and $b_c$ are the CIE L a b values of the control cloths washed without dye

And $L_d$, $a_d$, and $b_d$ are the are the CIE L a b values of the cloths washed with dye.

The increased in whiteness of the cloth was expressed as the change in blue:

$$\Delta b = b_c - b_d.$$

For each dye the effect of whitening, verses dulling the cloth was measured using the ratio Δb/ΔE; a higher value represents greater whiteness with less dulling.

The results are given in the table below and represent the average values from the 2nd and 4th wash.

The calculated values for the polymers containing 2 dyes were obtained by linear interpolation of the experimental value for the single dye polymers, such that

$$\text{Calculated} = 0.72f_b + 0.39f_r$$

Where $f_b$ is the wt fraction of RB4 and $f_r$ is the wt fraction of RR2.

| | Δb/ΔE | |
|---|---|---|
| | experimental | Calculated* |
| Polymer 1 | 0.72 | 0.72 |
| Polymer 2 | 0.39 | 0.39 |
| Polymer 3 | 0.79 | 0.65 |
| Polymer 4 | 0.72 | 0.62 |
| Polymer 5 | 0.66 | 0.59 |
| *comparative | | |

The mixture of RB4 and RR2 gave much less dulling than expected, as shown by the larger experimental Δb/ΔE values than calculated values.

## Claims

1. A laundry treatment composition comprising:

(i) from 2 to 70 wt% of a surfactant; and,
(ii) from 0.0001 to 2.0 wt% of a polymeric carbohydrate covalently bound to a reactive blue anthraquinone dye of the following form:

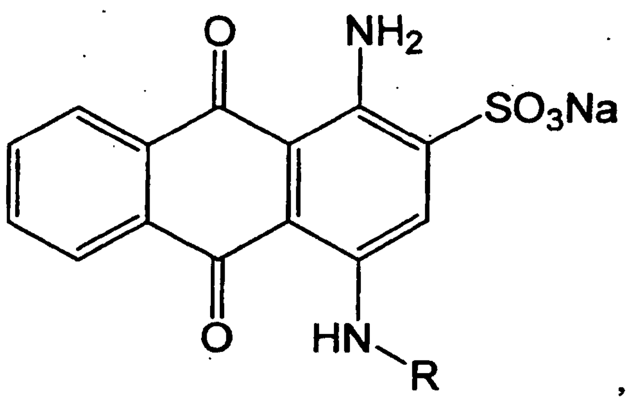

,

wherein R is an organic groups which contains a reactive group, and covalently bound to a reactive red mono-azo dye of the following form:

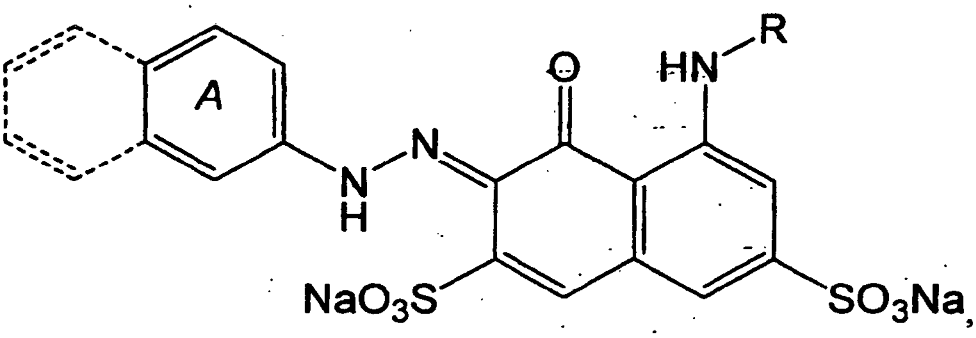

,

wherein the A ring is unsubstituted or substituted by a sulphonate group or a reactive group, blue-red dye polymer, wherein when the weight ratio of the blue dye: the red dye in the blue-red dye polymer is from 10:1 to 10:4.

2. A laundry treatment composition according to claim 1, wherein R is selected from: monochlorotriazinyl; dichlorotriazinyl; and, vinylsulfonyl.

3. A laundry treatment composition according to claim 1, wherein the reactive blue anthraquinone dye is selected from: Reactive Blue 2; Reactive Blue 4; Reactive Blue 5; Reactive Blue 19; Reactive Blue 27; Reactive Blue 29; Reactive Blue 36; Reactive Blue 49; Reactive Blue 50; and, Reactive Blue 224.

4. A laundry treatment composition according to claim 1, wherein the A ring is napthyl and is substituted by two sulphonate groups..

5. A laundry treatment composition according to claim 1 or 4, wherein R is an organic groups which contains a reactive group.

6. A laundry treatment composition according to claim 5, wherein the reactive group is selected from:

monochlorotriazinyl; dichlorotriazinyl; and, vinylsulfonyl

**7.** A laundry treatment composition according to claim 1 2, 3, or 4, wherein the reactive red dye is selected from: Reactive Red 1; Reactive Red 2; Reactive Red 3; Reactive Red 12; Reactive Red 17; Reactive Red 24; Reactive Red 29; Reactive Red 83; Reactive Red 88; Reactive Red 120; Reactive Red 125; Reactive Red 194; Reactive Red 189; Reactive Red 198; Reactive Red 219; Reactive Red 220; Reactive Red 227; Reactive Red 241; Reactive Red 261; and Reactive Red 253.

**8.** A laundry treatment composition according to any preceding claim, wherein the polymeric carbohydrate is cellulose ether.

**9.** A domestic method of treating a textile, the method comprising the steps of:

(i) treating a textile with an aqueous solution of the blue-red dye polymer as defined in any one of claims 1 to 8, the aqueous solution comprising from 10 ppb to 5000 ppm, of the blue-red dye polymer; and, from 0.0 g/L to 3 g/L of a surfactant; and,
(ii) optionally rinsing and drying the textile.

**10.** A domestic method of treating a textile according to claim 9, wherein the aqueous solution comprises a fluorescer in the range from 0.0001 g/l to 0.1 g/l.

**Patentansprüche**

**1.** Wäschebehandlungszusammensetzung,
die Folgendes aufweist:

(i) 2 bis 70 Gew.-% eines Tensids; und
(ii) 0,0001 bis 2,0 Gew.-% eines polymeren Kohlenwasserstoffs, der kovalent an einen blauen Anthrachinon-Reaktionsfarbstoff der folgenden Formel gebunden ist:

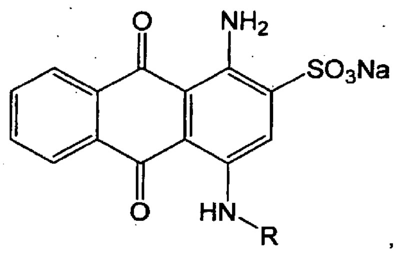

,

worin R ein organischer Rest ist, der eine reaktive Gruppe enthält, und kovalent an einen roten Monoazo-Reaktionsfarbstoff der folgenden Formel gebunden ist:

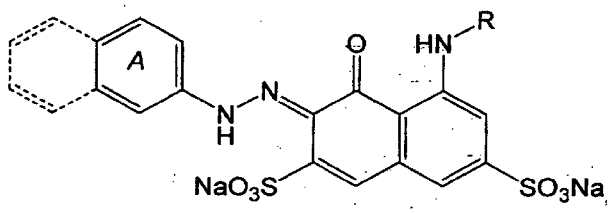

wobei der Ring A unsubstituiert oder mit einer Sulfonatgruppe oder einer reaktiven Gruppe substituiert ist,
ein blau-rotes Farbstoffpolymer, wobei das Gewichtsverhältnis zwischen blauem Farbstoff und rotem Farbstoff im blau-roten Farbstoffpolymer 10:1 bis 10:4 beträgt.

**2.** Wäschebehandlungszusammensetzung nach Anspruch 1,

wobei R aus Monochlortriazinyl, Dichlortriazinyl und Vinylsulfonyl ausgewählt ist.

3. Wäschebehandlungszusammensetzung nach Anspruch 1,
wobei der blaue Anthrachinon-Reaktionsfarbstoff ausgewählt ist aus: Reactive Blue 2, Reactive Blue 4, Reactive Blue 5, Reactive Blue 19, Reactive Blue 27, Reactive Blue 29, Reactive Blue 36, Reactive Blue 49, Reactive Blue 50 und Reactive Blue 224.

4. Wäschebehandlungszusammensetzung nach Anspruch 1,
wobei der Ring A Naphthyl ist und mit zwei Sulfonatgruppen substituiert ist.

5. Wäschebehandlungszusammensetzung nach Anspruch 1 oder 4,
wobei R ein organischer Rest ist, der eine reaktive Gruppe enthält.

6. Wäschebehandlungszusammensetzung nach Anspruch 5,
wobei die reaktive Gruppe aus Monochlortriazinyl, Dichlortriazinyl und Vinylsulfonyl ausgewählt ist.

7. Wäschebehandlungszusammensetzung nach Anspruch 1, 2, 3 oder 4,
wobei der rote Reaktionsfarbstoff ausgewählt ist aus: Reactive Red 1, Reactive Red 2, Reactive Red 3, Reactive Red 12, Reactive Red 17, Reactive Red 24, Reactive Red 29, Reactive Red 83, Reactive Red 88, Reactive Red 120, Reactive Red 125, Reactive Red 194, Reactive Red 189, Reactive Red 198, Reactive Red 219, Reactive Red 220, Reactive Red 227, Reactive Red 241, Reactive Red 261 und Reactive Red 253.

8. Wäschebehandlungszusammensetzung nach einem der vorstehenden Ansprüche, wobei der polymere Kohlenwasserstoff Celluloseether ist.

9. Verfahren zum Behandeln von Textilien im Haushalt,
wobei das Verfahren die folgenden Schritte aufweist:

(i) Behandeln der Textilien mit einer wässrigen Lösung des blau-roten Farbstoffpolymers nach einem der Ansprüche 1 bis 8, wobei die wässrige Lösung 10 ppb bis 5000 ppm der blau-roten Farbstoffpolymers und 0,0 bis 3 g/l eines Tensids aufweist; und
(ii) gegebenenfalls Spülen und Trocknen der Textilien.

10. Verfahren zum Behandeln von Textilien im Haushalt nach Anspruch 9, wobei die wässrige Lösung einen Aufheller im Bereich von 0,0001 bi 0,1 g/l aufweist.

## Revendications

1. Composition de traitement de linge comprenant :

(i) de 2 à 70 % en poids d'un tensioactif ; et
(ii) de 0,0001 à 2,0 % en poids d'un carbohydrate polymère lié de manière covalente à un colorant d'anthraquinone bleu réactif de la forme suivante :

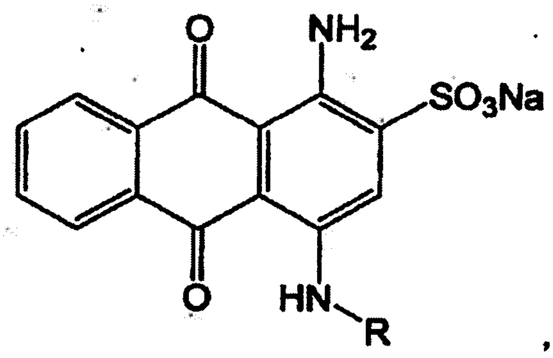

,

dans laquelle R est un groupe organique qui contient un groupe réactif, et lié de manière covalente à un colorant mono-azo rouge réactif de la forme suivante :

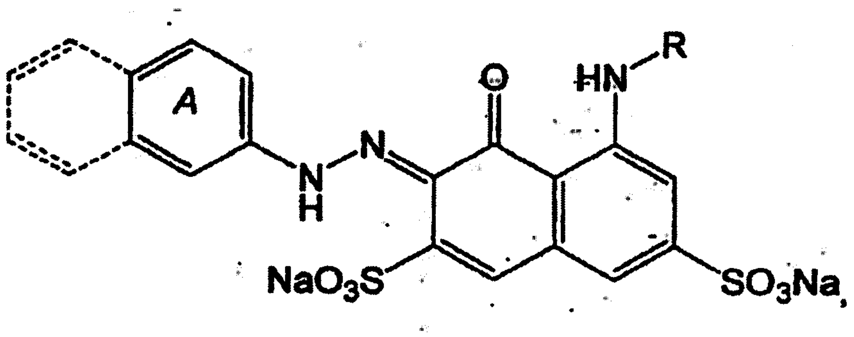

dans laquelle le cycle A est non substitué ou substitué par un groupe sulfonate ou un groupe réactif, un polymère de colorant bleu-rouge,

dans laquelle le rapport massique du colorant bleu : le colorant rouge dans le polymère de colorant bleu-rouge est de 10:1 à 10:4.

**2.** Composition de traitement de linge selon la revendication 1, dans laquelle R est choisi parmi : le monochlorotriazinyle ; le dichlorotriazinyle ; et, le vinylsulfonyle.

**3.** Composition de traitement de linge selon la revendication 1, dans laquelle le colorant d'anthraquinone bleu réactif est choisi parmi : le bleu réactif 2 ; le bleu réactif 4 ; le bleu réactif 5 ; le bleu réactif 19 ; le bleu réactif 27 ; le bleu réactif 29 ; le bleu réactif 36 ; le bleu réactif 49 ; le bleu réactif 50 ; et, le bleu réactif 224.

**4.** Composition de traitement de linge selon la revendication 1, dans laquelle le cycle A est un groupe naphtyle et est substitué par deux groupes sulfonate.

**5.** Composition de traitement de linge selon la revendication 1 ou 4, dans laquelle R est un groupe organique qui contient un groupe réactif.

**6.** Composition de traitement de linge selon la revendication 5, dans laquelle le groupe réactif est choisi parmi : le monochlorotriazinyle ; le dichlorotriazinyle ; et, le vinylsulfonyle.

**7.** Composition de traitement de linge selon la revendication 1, 2, 3, ou 4, dans laquelle le colorant rouge réactif est choisi parmi : le rouge réactif 1 ; le rouge réactif 2 ; le rouge réactif 3 ; le rouge réactif 12 ; le rouge réactif 17 ; le rouge réactif 24 ; le rouge réactif 29 ; le rouge réactif 83 ; le rouge réactif 88 ; le rouge réactif 120 ; le rouge réactif 125 ; le rouge réactif 194 ; le rouge réactif 189 ; le rouge réactif 198 ; le rouge réactif 219 ; le rouge réactif 220 ; le rouge réactif 227 ; le rouge réactif 241 ; le rouge réactif 261 ; et le rouge réactif 253.

**8.** Composition de traitement de linge selon l'une quelconque des revendications précédentes, dans laquelle le carbohydrate polymère est un éther de cellulose.

**9.** Procédé domestique de traitement d'un textile, le procédé comprenant les étapes consistant :

(i) à traiter un textile avec une solution aqueuse du polymère de colorant bleu-rouge selon l'une quelconque des revendications 1 à 8, la solution aqueuse comprenant de 10 ppb à 5 000 ppm, du polymère de colorant bleu-rouge ; et, de 0,0 g/l à 3 g/l d'un tensioactif ; et,

(ii) à rincer éventuellement et à sécher le textile.

**10.** Procédé domestique de traitement d'un textile selon la revendication 9, dans lequel la solution aqueuse comprend un fluorescent dans l'intervalle de 0,0001 g/l à 0,1 g/l.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006055787 A, Procter & Gamble
- EP 1852496 A
- WO 9909124 A
- WO 2008017570 A
- EP 328177 A, Unilever
- EP 070074 A
- EP 346995 A, Unilever
- EP 0239910 A, Proctor and Gamble
- EP 0384070 A
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- WO 9205249 A
- WO 9401541 A
- EP 407225 A
- EP 260105 A
- WO 9535381 A
- WO 9600292 A
- WO 9530744 A
- WO 9425578 A
- WO 9514783 A
- WO 9522615 A
- WO 9704079 A
- WO 9707202 A
- WO 0060063 A
- GB 1296839 A
- WO 95026397 A
- WO 00060060 A
- US 4435307 A
- US 5648263 A
- US 5691178 A
- US 5776757 A
- WO 8909259 A
- WO 96029397 A
- WO 98012307 A
- WO 9324618 A
- WO 9510602 A
- WO 9815257 A
- WO 9219709 A
- WO 9219708 A


### Non-patent literature cited in the description


- Industrial Dyes. Wiley VCH, 2003
- *Journal of Chromatography,* 1980, vol. 192, 275-293
- *Polymer Degradation and Stability,* 1997, vol. 56, 331-337
- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside-Taschenbuch. Carl Hauser Verlag, 1981
- International Buyers Guide. CFTA Publications, 1992
- Chemicals Buyers Directory 80th Annual Edition. Schnell Publishing Co, 1993
- **POUCHER.** *Journal of the Society of Cosmetic Chemists,* 1955, vol. 6 (2), 80
- **DARTOIS et al.** *Biochemica et Biophysica Acta,* 1993, vol. 1131, 253-360